Europäisches Patentamt

European Patent Office

Office européen des brevets

(11) Numéro de publication: **0 423 385 A1**

## (12) DEMANDE DE BREVET EUROPEEN

(21) Numéro de dépôt: 89119194.2

(22) Date de dépôt: 16.10.89

(51) Int. Cl.⁵: **H01M 10/24, H01M 10/44**

(43) Date de publication de la demande:
24.04.91 Bulletin 91/17

(84) Etats contractants désignés:
**BE CH DE FR GB IT LI LU SE**

(71) Demandeur: **SORAPEC Société de Recherches et d'Applications Electrochimiques**
**192 rue Carnot**
**F-94120 Fontenay-sous-Bois(FR)**

(72) Inventeur: **Doniat, Denis**
**3 bis, rue Jean Baptiste Lanoz**
**F-94170 Le Perreux(FR)**
Inventeur: **Bronoel, Guy**
**13, rue Jean de la Bruyère**
**F-78000 Versailles(FR)**

(74) Mandataire: **Thibon-Littaye, Annick**
**Cabinet A. THIBON-LITTAYE 11 rue de l'Etang**
**F-78160 Marly-le-Roi(FR)**

(54) Perfectionnements apportés aux générateurs électrochimiques électriquement rechargeables à électrode de zinc.

(57) La présente invention concerne la réalisation et le fonctionnement des générateurs électrochimiques à électrodes de zinc, constituant des accumulateurs électriquement rechargeables. Elle a pour objet un accumulateur rechargeable à électrodes négatives de zinc, comportant un ensemble de cellules électrochimiques pour réception d'un électrolyte de conduction ionique entre une électrode positive et une électrode négative de zinc limitant chaque cellule, caractérisé en ce que le volume d'électrolyte dans chaque cellule est suffisant pour que le zinc s'oxydant en période de décharge de l'accumulateur se dissolve entièrement à l'état de zincates basiques dans l'électrolyte utilisé, et en ce que l'accumulateur est adapté à être rechargé en régime pulsé.

## PERFECTIONNEMENTS APPORTES AUX GENERATEURS ELECTROCHIMIOUES ELECTRIQUEMENT RECHARGEABLES A ELECTRODE DE ZINC

La présente invention concerne la réalisation et le fonctionnement des générateurs électrochimiques à électrodes de zinc, constituant des accumulateurs électriquement rechargeables.

Un générateur ou accumulateur de ce type est constitué de manière usuelle d'un ensemble de cellules contenant un électrolyte de conduction ionique entre une électrode positive et une électrode négative. Quand, comme il est envisagé ici, l'électrode négative à l'état chargé est faite de zinc métal, l'électrolyte est généralement de type basique, soit une solution aqueuse de potasse KOH, et l'électrode positive est le plus souvent à base de nickel, ou parfois constituée d'une électrode à air.

Les générateurs électrochimiques de ce genre, tels qu'ils ont été conçus et développés, ont vocation à être périodiquement rechargés, en alternance avec des séquences d'utilisation où ils se déchargent. Pendant la décharge, l'électrode positive se réduit, ce qui implique par exemple la réduction de nickel oxydé en hydroxyde de nickel, tandis que le métal anodique, en l'occurence le zinc, passe à l'état de zincates qui se dissolvent dans l'électrolyte.

Charger l'accumulateur, par application d'une tension électrique de sens inverse entre les électrodes, implique donc, en même temps que l'oxydation du métal de l'électrode positive, la réduction du zinc, qui se redépose sur l'électrode négative.

On rencontre alors un problème essentiel, qui limite considérablement le nombre de cycles de charges et décharges que l'accumulateur est capable de subir, et donc sa durée de vie. Il s'agit d'une déformation de l'électrode de zinc, avec apparition de dépôts spongieux et de renflements ou protubérances plus pointues appelées dendrites, d'où résultent des courts-circuits entre les électrodes et une réduction des tensions opérationnelles.

C'était d'ailleurs déjà pour résoudre partiellement ce problème que l'on a abandonné des conceptions antérieures où le zinc passait à l'état oxydé sous forme d'oxydes ou hydroxydes restant liés à l'électrode solide, malgré l'inconvénient de voir ainsi diminuer les énergies massiques et volumiques pratiquement réalisables.

On a proposé ensuite de réaliser en régime pulsé les opération de charge, parfois aussi celles de décharge. Par ailleurs, cette solution s'étant révélée insuffisante, les brevets français 85 01338 et 86 08637, et le brevet européen 0190078 ont décrit des réalisations fort complexes où l'électrolyte est mis en circulation et en agitation pendant la charge et la décharge. Outre les problèmes de construction et de coût, rencontrés dans ce genre de réalisation, il s'avère qu'elles ne permettent pas d'atteindre les résultats escomptés et que, notamment, une circulation de l'électrolyte d'une cellule à une autre risque fort, au contraire, d'être nocive à la qualité des dépôts de zinc.

La présente invention permet d'éviter les inconvénients de cet art antérieur et d'obtenir des énergies massiques élevées, dans des générateurs à électrode de zinc supportant des cycles de charge et décharge répétés, avec permanence de dépôts de zinc compacts et non dendritiques. Elle résulte d'une démarche tout à fait opposée à tout ce que l'on en croyait à ce jour, car elle conduit à ne pas limiter le volume d'électrolyte, quitte à voir augmenter l'encombrement de l'ensemble.

On a constaté en effet qu'il était préférable d'utiliser un volume d'électrolyte suffisant pour assurer facilement la dissolution complète des zincates formés progressivement lors de la décharge, et qu'en combinaison, le plus efficace pour éviter la formation de dendrites était d'effectuer la charge en régime pulsé. Sans vouloir se limiter aucunement à une interprétation scientifique des phénomènes, qui pourrait ne pas se vérifier lors d'une étude plus précise, il semble à l'heure actuelle que l'on évite ainsi la formation de composés intermédiaires de zinc partiellement oxydé et non solubilisé immédiatement, qui favoriserait la formation de dendrites ou, au moins, le manque de compacité du dépôt de zinc anodique.

Ainsi, l'invention a pour objet un accumulateur rechargeable à électrodes négatives de zinc, comportant un ensemble de cellules électrochimiques pour réception d'un électrolyte de conduction ionique entre une électrode positive et une électrode négative de zinc limitant chaque cellule, caractérisé en ce que le volume d'électrolyte dans chaque cellule est suffisant pour que le zinc s'oxydant en période de décharge de l'accumulateur se dissolve entièrement à l'état de zincates basiques dans l'électrolyte utilisé, et en ce que l'accumulateur est adapté à être rechargé en régime pulsé.

Dans ces conditions, le volume disponible pour l'électrolyte dans chaque cellule est variable en fonction de l'électrolyte utilisé et de la capacité de la cellule en charge/décharge électrochimique. De préférence, on prévoira un électrolyte potassique de concentration comprise entre 6 N et 10 N, présent en quantité comprise entre 250 $cm^3$ et 350 $cm^3$ par cellule, pour une capacité comprise entre 55 et 65 Ah. A titre d'exemple, la capacité de dissolution des produits d'oxydation du zinc dans un électrolyte courant a base d'une solution aqueuse de potasse 8 N au repos, c'est-à-dire sans agitation ou circulation forcée, demande un volume par cellule d'environ 0,25 $dm^3$ par tranche de capacité de 50 Ah (ampères x heure), soit notamment un volume de 1 $dm^3$ pour une capacité de 200 Ah.

Conformément à une autre caractéristique de l'invention, un tel accumulateur est rechargeable suivant un régime pulsé comprenant des impulsions dites cathodiques d'une durée comprise entre 1 et 10 secondes, alternées avec des impulsions en sens inverse (impulsions anodiques) de durée comprise entre 0,20 et 0,5 secondes, sous des densités de courant de charge comprises entre 3 et 10 $mA/cm^2$.

L'invention a donc également pour objet un procédé d'utilisation d'un tel accumulateur, caractérisé en ce que celui-ci est périodiquement rechargé électriquement en régime pulsé. Et de préférence, on lui applique alors des impulsions cathodiques d'une durée comprise entre 1 et 10 secondes, alternées avec des impulsions anodiques de durée comprise entre 0,20 et 0,5 secondes, sous des densités de courant de charge comprises entre 3 et 10 $mA/cm^2$.

De telles conditions de recharge se sont révélées plus avantageuses, dans le cadre de l'invention, que celles qui avaient été recommandées par l'art antérieur. Dans celui-ci on appliquait des impulsions de charge cathodiques d'une durée de quelques millisecondes, séparées par des temps de repos d'une durée au moins triple, interrompue très brièvement par une impulsion de sens inverse.

Dans les conditions pratiques de mise en oeuvre de l'invention, il est possible de respecter également des périodes de repos de durée plus longues que les impulsions anodiques, mais on n'y a pas intérêt en général. Les opérations de charge se trouvent ainsi simplifiées dans leur globalité, et le matériel nécessaire est moins coûteux, alors que dans le même temps la qualité des dépôts de zinc est supérieure.

Il en est d'ailleurs de même pour ce qui concerne une agitation éventuelle de l'électrolyte. L'ajouter ne sort pas du cadre de l'invention, mais elle devient inutile grâce à l'invention, de sorte qu'il est généralement préférable de l'éviter, et donc de faire fonctionner l'accumulateur avec l'électrolyte au repos.

Par contre il est spécialement avantageux que cet électrolyte contiennent des additifs dont l'emploi est classique en soi pour favoriser un bon état de surface des dépôts de zinc. Le plus souvent il s'agit de silicates métalliques ou de composés perfluorés.

Parmi les cations métalliques convenant en additifs, on peut utiliser notamment ceux tels que $Sn^{4+}$, $Pb^{2+}$, $Bi^{3+}$, avec toutefois une préférence pour le plomb $Pb^{2+}$. La concentration de l'électrolyte en ions métalliques, et notamment en ions $Pb^{2+}$,

est avanta-geusement comprise entre $5.10^{-4}$ et $5.10^{-2}$ mol/l, et plus particulièrement de l'ordre de 1 à $5 .10^{-3}$ mol/l. En pratique, il apparaît en combinaison avec les préférences exprimées ci-avant, une teneur optimale de l'ordre de $2.10^{-3}$ $mol/dm^3$, cet optimum étant fonction de la durée de la charge de la quantité d'électrolyte existant dans l'accumulateur et de la capacité totale de cet accumulateur.

Dans des exemples particulièrement avantageux, convenant notamment quand l'électrolyte est immobile et constitué de potasse 8 N, contenant $10^{-3}$ mole/l de plomb, la charge s'effectue avec des impulsions cathodiques de 2,6 secondes environ et des impulsions anodiques de 0,16 secondes environ, les impulsions cathodiques et anodiques étant sensiblement de même intensité, sous des densités de courant de l'ordre de 5 mA/ $cm^3$.

Concernant la durée des impulsions anodiques, bien que des durées supérieures à 10 % de la durée de l'impulsion cathodique puissent conduire à de bons dépôts, on conçoit que dans le souci de conserver un bon rendement à la charge, il soit recommandé de réduire le plus possible la durée de ces impulsions. Il a été montré que pour des impulsions anodiques de 5 $mA/cm^2$, cette durée pouvait être ramenée à environ 5 % de la durée de l'impulsion cathodique.

Concernant le comportement de l'électrode de zinc à la décharge, il a été observé qu'il était avantageux que les densités du courant de décharge soient supérieures à environ 5 $mA/cm^2$, et de préférence comprises entre 10 $mA/cm^2$ et 40 $mA/cm^2$.

Conformément à un exemple particulier de mise en oeuvre de l'invention, il est possible de soumettre une électrode de zinc à des cycles répétés de charge et décharge, tout en conservant des dépôts de zinc compacts et non dendritiques, lorsque cette électrode, en présence d'un électrolyte non agité constitué initialement par KOH 8 N auquel est ajouté 1 à 5 % de silicates alcalins et comportant des sels de plomb en teneur comprise entre $5.10^{-4}$ et $5.10^{-3}$ mole/litre, est soumise à des recharges périodiques, caractérisées chacune par une succession d'impulsions alternativement cathodiques et anodiques dont la durée pour les impulsions cathodiques est supérieure à 1 s et inférieure à 10 s, et par exemple de l'ordre de 3 s, les impulsions anodiques ayant une durée de l'ordre de 5 % de celle des impulsions cathodiques et la densité de courant caractérisant ces impulsions étant du même ordre pour les impulsions anodiques que pour les impulsions cathodiques et comprise entre 3 et 10 $mA/cm^2$, et avantageusement de l'ordre de 5 $mA/cm^2$.

Conformément à des caractéristiques secondaires de l'invention, l'accumulateur peut présenter d'autres caractéristiques, particulièrement souhaitables dans la mise en oeuvre de l'invention, bien qu'elles puissent être connues individuellement par des documents de l'art antérieur. En particulier, il est souvent avantageux d'envelopper l'électrode positive associée à l'électrode de zinc, d'un séparateur microporeux collé à sa surface, de manière à éviter des déperditions.

D'autre part, il est apparu que la disposition relative des électrodes et la géométrie de l'ensemble avaient également une incidence en vue d'une amélioration du comportement de celui-ci en cyclage. Plus particulièrement, on a pu constater un réel intérêt à appliquer les conditions suivantes, soit séparément, soit en combinaison le plus souvent.

En particulier :
- les plaques des électrodes positives et négatives sont bien parallèles ;
- la distance entre les plaques est compris entre 1 et 2 mm, et avantageusement de l'ordre de 1,5 mm, pour une capacité surfacique de l'électrode de zinc de l'ordre de 25 à 35 mAh/cm$^2$ par face;
- le maintien de l'espacement entre les électrodes est assuré par un espaceur qui minimise les effets de distorsion et d'écrantage du champ électrique tout en permettant une excellente évacuation des gaz formés notamment en fin de charge.

De ce point de vue, l'espacement est avantageusement assuré par des pions circulaires d'un diamètre compris entre 2 et 6 mm (de préférence 4 mm) et d'épaisseur 1,5 mm, à raison de 15 à 20 pions répartis sur une surface de 1,5 dm$^2$.

D'autre part :
- l'électrode positive, dans sa partie active (région imprégnée de matière active), est de surface inférieure à celle de l'électrode négative, les bords de l'électrode négative se trouvant notamment à une distance de 3 à 6 mm (de préférence 5 mm) de la projection sur elle-même du contour des zones actives de la positive ;
- pour éviter tout effet de bord, l'électrode négative, c'est-à-dire du collecteur la constituant, est dépourvues d'arêtes mécaniques vives, ce qui peut impliquer notamment le recours à un vernis ou revêtement ad hoc ;
- les têtes de plaques des négatives et des positives (y compris toutes zones inertes de la positive) peuvent être isolées par rapport à l'électrolyte par un revêtement ou vernis ad hoc ;
- le collecteur de la négative peut avantageusement être constitué par une tôle mince ou feuillard d'acier doux cadmié.

Un élément de 50 Ah comportant 6 électrodes négatives et 5 électrodes positives a été réalisé conformément à l'invention. Son énergie massique était de 65 Wh/kg et il a pu être rechargé 800 cycles sans inconvénient. On peut montrer à partir de ces résultats que pour un dimensionnement plus important de l'accumulateur, l'énergie massique pourrait être comprise entre 70 et 75 Wh/kg, avec les mêmes avantages.

## Revendications

1. Accumulateur rechargeable à électrodes négatives de zinc, comportant un ensemble de cellules électrochimiques pour réception d'un électrolyte de conduction ionique entre une électrode positive et une électrode négative de zinc limitant chaque cellule, caractérisé en ce que le volume d'électrolyte dans chaque cellule est suffisant pour que le zinc s'oxydant en période de décharge de l'accumulateur se dissolve entièrement à l'état de zincates basiques dans l'électrolyte utilisé, et en ce que l'accumulateur est adapté à être rechargé en régime pulsé.

2. Accumulateur à électrodes de zinc suivant la revendication 1, caractérisé en ce qu'il contient dans chaque cellule un électrolyte potassique de concentration comprise entre 6 N et 10 N KOH, présent en quantité comprise entre 250 cm$^3$ et 350 cm$^3$ par cellule pour une capacité comprise entre 55 et 65 Ah.

3. Accumulateur suivant la revendication 2, caractérisé en ce que le volume par cellule est d'environ 0,25 dm$^3$ par tranche de capacité de 50 Ampères x heure.

4. Accumulateur à électrodes de zinc suivant l'une quelconque des revendications 1 à 3, caractérisé en ce qu'il est rechargeable suivant un régime pulsé comprenant des impulsions dites cathodiques d'une durée comprise entre 1 et 10 secondes, alternées avec des impulsions en sens inverse (impulsions anodiques) de durée comprise entre 0,20 et 0,5 secondes, sous des densités de courant de charge comprises entre 3 et 10 mA/cm$^2$.

5. Accumulateur à électrodes de zinc suivant l'une quelconque des revendications 1 à 4, caractérisé par l'emploi d'un électrolyte non agité constitué initialement par KOH 8 N auquel est ajouté 1 à 5 % de silicates alcalins et comportant des sels de plomb en teneur comprise entre 5.10$^{-4}$ et 5.10$^{-3}$ mole/litre,

6. Accumulateur à électrodes de zinc suivant l'une quelconque des revendications 1 à 5, caractérisé par une distance entre les plaques d'électrodes, toutes parallèles Ah/cm$^2$ par face.

7. Accumulateur à électrodes de zinc suivant l'une quelconque des revendications 1 à 6, caractérisé par une électrode négative, qui, au niveau du collecteur la constituant, est dépourvue d'arêtes mécaniques vive.

8. Procédé d'utilisation d'un accumulateur à électrodes de zinc suivant l'une quelconque des revendications 1 à 7, caractérisé en ce que celui-ci est périodiquement rechargé électriquement en régime pulsé.

9. Procédé suivant la revendication 8, caractérisé en ce qu'on applique en période de charge des impulsions cathodiques d'une durée comprise entre 1 et 10 secondes, alternées avec des impulsions anodiques de durée comprise entre 0,20 et 0,5 secondes, sous des densités de courant de charge comprises entre 3 et 10 mA/cm$^2$.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | FR-A-2 630 862  (SORAPEC S.A.) <br> * En entier * <br> --- | 1-9 | H 01 M  10/24 <br> H 01 M  10/44 |
| A | PATENT ABSTRACTS OF JAPAN, vol. 10, no. 75 (E-390)[2132], 25 mars 1986; & JP-A-60 221 974 (SANYO DENKI K.K.) 06-11-1985 <br> * En entier * <br> --- | 1,8 | |
| A | US-A-3 672 996  (DEMETRIOS V. LOUZOS) <br> * Résumé; colonne 2, ligne 64 - colonne 3, ligne 19 * <br> --- | 1,5 | |
| A | GB-A-2 064 209  (THE STATE OF ISRAEL) <br> * Résumé; page 2, ligne 92 - page 3, ligne 118 * <br> --- | 1 | |
| A | US-A-3 876 470  (JAMES McBREEN) <br> * En entier * <br> --- | 7 | |
| A | FR-A-2 186 743  (S.A.F.T.) <br> * En entier * <br> ----- | 1 | **DOMAINES TECHNIQUES RECHERCHES (Int. Cl.5)** <br><br> H 01 M  10/24 <br> H 01 M  10/44 |

Le présent rapport a été établi pour toutes les revendications

| Lieu de la recherche | Date d'achèvement de la recherche | Examinateur |
|---|---|---|
| LA HAYE | 26-06-1990 | DE VOS L.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................................
& : membre de la même famille, document correspondant

EPO FORM 1503 03.82 (P0402)